# EUROPEAN PATENT APPLICATION

(11) **EP 1 829 929 A1**
(43) Date of publication of application: **05.09.2007**
(21) Application number: 05781505.2
(22) Date of filing: 30.08.2005
(51) Int. Cl.: C08L 77/00, C08L 67/00, C08L 77/12, F16D 3/84, F16J 3/04, F16J 15/52, C08L 33/04

(54) **THERMOPLASTIC ELASTOMER BLEND**

(30) Priority: 24.12.2004 JP 2004372908
(71) Applicant: Carl Freudenberg KG, 69469 Weinheim (DE)
(72) Inventor: Watanabe, Kensuke c/o NOK Corporation, Fujisawa-shi, Kanagawa; 2510042 (JP); Kojima, Yoshifumi c/o NOK Corporation, Fujisawa-shi, Kanagawa; 2510042 (JP); Takeishi, Yoshiyuki c/o NOK Corporation, Fujisawa-shi, Kanagawa; 2510042 (JP)
(74) Representative: TBK-Patent
(86) International application number: PCT/JP2005/015745
(87) International publication number: WO 2006/067894

(57) **Abstract**

A thermoplastic elastomer blend, which comprises 15 to 85% by weight of a cross-linked acrylic rubber-dispersed polyamide-based thermoplastic elastomer, and 85 to 15% by weight of a polyester-based thermoplastic elastomer, or which comprises 20 to 90% by weight of a cross-linked acrylic rubber-dispersed polyamide-based thermoplastic elastomer, and 80 to 10% by weight of a polyamide-based thermoplastic elastomer. The cross-linked acrylic rubber-dispersed polyamide-based thermoplastic elastomer is used also as a blend with both of the polyester-based thermoplastic elastomer and the polyamide-based thermoplastic elastomer. The thermoplastic elastomer blend is effectively used as joint boot-molding material, etc., having distinguished heat resistance and low temperature characteristics, applicable also to the joint boot inboard side.

## Description

### TECHNICAL FIELD

The present invention relates to a thermoplastic elastomer blend, and more particularly to a thermoplastic elastomer blend for effective use as joint boot-molding materials, etc. with a distinguished heat resistance.

The automobile drive shaft is provided with universal joints each on the engine side and the wheel side, and joint boots as joint covers are provided to house the joints and retain the grease as sealed in the joints.

The joint boots are provided on the drive shaft and consequently are subject to services at a high speed revolution or bending, or to services under extremely low temperature conditions in the bent state.

Such joint boots are available in different types, depending on service positions, i.e. outboard side type (tire side type) and inboard side type (engine side type). As to the outboard side type, joint boot materials are now shifting from vulcanized rubber materials to thermoplastic elastomer materials to further improve the recent recycle ratio of automobile parts, specifically from chloroprene-based rubber to recyclible polyester-based thermoplastic elastomer with higher strength and bendability and distinguished moldability.
Patent Literature 1 : JP-A-9-037802

The inboard side type, on the other hand, requires no such a high bendability as in the case of the outboard side type, but requires a higher heat resistance than in the case of the polyester-based thermoplastic elastomer, because the inboard side type must be provided at the position near the engine. Thus, it has been so far considered difficult to shift the joint boot materials of the inboard side type from the vulcanized rubber to thermoplastic elastomers.

Materials having a higher heat resistance than that of polyester-based thermoplastic elastomers include, for example, an acrylic rubber-containing polyamide-based thermoplastic elastomer available from Zeon Chemical Co., etc. When joint boots are molded from such a polyamide-based thermoplastic elastomer by blow molding, fine irregularities are formed on the product surfaces, and repeated bending ultimately develops cracks on the surfaces as starting points at the fine irregularities. In the case of injection molding, the product surface state is smoother than in the case of blow molding, but the higher melt viscosity results in such problems as poor moldability, appearance of anisotropy in the physical properties of material, depending on flow during the injection molding, higher hardness, and insufficient elongation and strength in the flow direction.
Patent Literature 2 : US P 5,591,798
Patent Literature 3 : JP-A-1-306456

### DISCLOSURE OF THE INVENTION

### PROBLEM TO BE SOLVED BY THE INVENTION

An object of the present invention is to provide a thermoplastic elastomer blend for effective use as joint boot-molding materials, etc. with distinguished heat resistance and low temperature characteristics, applicable also to inboard side of joint boots.

### MEANS FOR SOLVING THE PROBLEM

The object of the present invention can be attained by a thermoplastic elastomer blend, which comprises 15 to 85% by weight of a cross-linked acrylic rubber-dispersed, polyamide-based thermoplastic elastomer and 85 to 15% by weight of a polyester-based thermoplastic elastomer, or a thermoplastic elastomer blend, which comprises 20 to 90% by weight of a cross-linked acrylic rubber-dispersed polyamide-based thermoplastic elastomer and 80 to 10% by weight of a polyamide-based thermoplastic elastomer, and the cross-linked acrylic rubber-dispersed polyamide-based thermoplastic elastomer can be also used as a blend with both of the polyester-based thermoplastic elastomer and the polyamide-based thermoplastic elastomer.

### EFFECT OF THE INVENTION

The present joint boot materials have an improved moldability, a smooth surface state in the case of blow molding and an improved moldability in the case of injection molding due to blending of a cross-linked acrylic rubber-dispersed polyamide-based thermoplastic elastomer having a distinguished heat resistance, but a poor moldability, with either a polyester-based thermoplastic elastomer or a polyamide thermoplastic elastomer having distinguished strength, bendability and moldability, but a poor heat resistance, or both thereof. By adjusting their blending proportion, necessary properties for boot materials, such as hardness, strength, elongation, heat resistance, grease resistance and low temperature characteristics, can be adjusted as desired. The molding products are distinguished in every aspects of heat resistance, oil resistance, grease resistance, moldability, low temperature characteristics, bending resistance, crack growth resistance, compression set characteristics, weatherability and ozone resistance, and thus can be effectively used also for inboard side application of joint boot.

Particularly, in the case of blending the cross-linked acrylic rubber-dispersed polyamide-based thermoplastic elastomer only with the polyester-based thermoplastic elastomer, a compatibility between the blend raw materials themselves is low, so that the mixing is not satisfactory, depending on the kneading conditions, resulting in separation of the raw materials from each other, or appearance of such phenomena as easy lamina exfoliation of molding products, not found in the initial test of physical properties, but found in the high temperature durability test. Use of the cross-linked acrylic rubber-dispersed polyamide-based thermoplastic elstomer as a blend with a polyamide-based thermoplastic elastomer or together with the polyester-based thermoplastic elastomer is effective also for solving these problems.

### BEST MODES FOR CARRYING OUT THE INVENTION

Cross-linked acrylic rubber-dispersed polyamide-based thermoplastic elastomer for use in the present invention includes dispersion of acrylic rubber into polyamide resin, preferably by dynamic cross-linking the acrylic rubber into the polyamide resin with a cross-linking agent.

Polyamide resin for forming the hard segments is used in a proportion of 20 to 60wt.%, preferably 20 to 55wt.% on the basis of sum total of the polyamide resin and the cross-linked acrylic rubber. When the polyamide resin is used in a higher proportion than 60wt.%, the hardness will be increased, and the elastomeric properties will be lost, whereas when used in a lower proportion than 20wt.%, the thermoplasticity will be lost.

The polyamide resin for use herein includes resins having a softening point or a melting point of 160°C to 280°C, such as nylon resins, e.g. nylon 3, nylon 4, nylon 6, nylon 7, nylon 8, nylon 42, nylon 46, nylon 66, nylon 69, nylon 610, nylon 11, nylon 12, nylon 6 66 (caprolactam-hexamethylene adipamide copolymer), etc., alone, their mixtures or copolymers.

Acrylic rubber for use in the cross-linking includes, preferably α -olefin-alkyl (meth)acrylate copolymer with a distinguished heat resistance, because the cross-linking is carried out by dynamic cross-linking under heated conditions at about 100° to about 350°C, preferably about 150° to about 300°C, more preferably about 180° to about 280°C, as disclosed in the afore-mentioned Patent Literatures 2 and 3. From the viewpoint of oil resistance, homopolymers or copolymers of alkyl (meth)-acrylate or alkoxyalkyl (meth)acrylate, or copolymers thereof with α -olefin, or polymer blends of these polymers can be also used, if desired.

The α -olefin for use herein includes α -olefins of C₂~C₁₂, such as ethylene, propylene, butene-1, isobutylene, pentene, heptene, octene, decene, dodecene, etc., preferably α -olefins of C₂~C₄. The alkyl (meth)acrylate for use herein includes acrylates having an alkyl group of C₁ ~C₁₂, preferably C₁~C₄, such as methyl acrylate, ethyl acrylate, n-butyl acrylate, t-butyl acrylate, 2-ethylhexyl acrylate, octyl acrylarte, decyl acrylate, dodecyl acrylate, etc., and methacrylates having an alkyl group of C₁~C₁₂, preferably C₁~C₄, such as methyl methacrylate, ethyl metacrylate, n-butyl methacrylate, t-butyl methacrylate, 2-ethylhexyl methacrylate, octyl metacrylate, decyl methacrylarte, dodecyl methacrylate, etc. The alkoxyalkyl (meth)acrylate for use herein includes alkoxyalkyl (meth)acrylates having an alkoxyl group of C₁~C₂ and an alkyl group of C₂ ~C₄ such as methoxyethyl acrylate, ethoxyethyl acrylate, methoxybutyl acrylate, ethoxybutyl acrylate, methoxyethyl acrylate, ethoxyethyl methacrylate, methoxybutyl methacrylate, ethoxybutyl methacrylate, etc.

It is preferable that these copolymers are further copolymerized with a cross-linkable group-containing (meth)acrylate having a carboxyl group, a hydroxyl group, a chloro group, an expoxy group, a diene group, an isocyanate group, an amine group, an amide group, an oxazoline group or the like. In the case of α -olefin-alkyl (meth)acrylate copolymer further comporimerized with a cross-linkable group-containing (meth)acrylate, a copolymer composition comprising about 10 to about 69.9mol.% of α -olefin, about 10 to about 69.5mol.% of alkyl (meth)acrylate, and about 0.5 to about 10mol.% of cross-likable group-containing (meth)acrylate can be used and such a copolymer is essentially non-crystalline and has a glass transition temperature Tg of not higher than room temperature. Examples of such an acrylic rubber copolymer are disclosed also in the following Non-Patent Literature 1.
Non-Patent Literature 1 : Rubber World Blue Book, pp393-4 (1987)

(Meth)acrylate copolymer having such a cross-linkable group can be also used, and the (meth)acrylate for use herein includes those used as such in acrylic rubber comprising typically alkyl (meth)acrylate, and alkyl (meth)acrylate and alkoxyalkyl (meth)acrylate as main components. Alkoxyalkyl (meth)acrylate copolymer comprising about 0.5 to about 10mol.% of cross-linkable group-containing (meth)acrylarte, the balance being alkyl (meth)acrylate and alkoxyalkyl (meth)acrylate in any desired copolymer composition, can be used. Furthermore, ethylene-monoalkyl maleate ester, etc. can be also used.

Cross-linking of acrylic rubber copolymer to be dispersed into the polyamide resin can be carried out by a dynamic cross-linking process for melt-mixing the polyamide resin and the acrylic rubber copolymer at the afore-mentioned temperature in the presence of a cross-linking agent selected in view of the species of cross-linkable group contained in the acrylic rubber copolymer, for example, polyol, polyamine, polyisocyanate, epoxy group-containing compound, etc., typically by adding the cross-linking agent to a mastication mixer while masticating the polyamide resin and the acrylic rubber copolymer. Other cross-linking process than the dynamic vulcanization includes, for example, a process comprising thoroughly vulcanizing acrylic rubber either dynamically or statically without any addition of polyamide resin, followed by pulverization and mixing with polyamide resin at a melting point or softening point of the polyamide, or a higher temperature.

The resulting polyamide-based thermoplastic elastomer containing cross-linked acrylic rubber as dispersed therein as soft segments (which will be hereinafter referred to as "acrylic rubber/polyamide-based thermoplastic elastomer") has such a cross-linking density as an unextractable matter of the acrylic rubber/polyamide-based thermoplastic elastomer is 50% or more, preferably 30% or more, when a pressed film (thickness : about 0.2mm) thereof is dipped into an organic solvent such as dichloromethane, toluene, tetrahydrofuran, etc. for 48 hours. The acrylic rubber/polyamide-based thermoplastic elastomer can be used, also upon addition of a plasticizer or a filler usually used, such as phthalate ester, phosphate ester, carbon black, silica, etc., thereto.

As such acrylic rubber/polyamide-based thermoplastic elastomer, commercially available products, for example, Zeotherm series, products of Zeon Chemicals, etc. can be used as such.

The polyester-based thermoplastic elastomer for use in the present invention comprises short-chain polyester hard segments and long-chain polyester soft segments.

The polyester for constituting the short-chain polyester hard segments includes polyesters derived from a dicarboxylic acid such as terephthalic acid, isophthalic acid, adipic acid, sebacic acid, etc., preferably terephthalic acid, and a diol such as an aliphatic diol represented by the general formula HO(CH₂)nOH (where n: an integer of 2 or more, preferably 2 to 6), or an alicyclic diol such as 1,1-cyclohexanedimethanol, 1,4-cyclohexanedimethanol, etc., preferably 1,4-butanediol ; particularly preferably polybutylene terephthalate, etc.

The polyester for making the long-chain polyester segments includes polyesters derived from the afore-mentioned dicarboxylic acid, and an alkylene oxide polymer such as polyethylene oxide, polypropylene oxide, polybutylene oxide, polyhexamethylene oxide, etc., or ethylene oxide-propylene oxide copolymer, glycol-terminated polyalkylene glycol such as ethylene oxide adduct polymer of polypropylene glycol, etc., preferably polybutylene oxide.

These short-chain polyester hard segments and the long-chain polyester soft segments can be obtained by block copolymerization, and the constitutive proportion of the segments is about 15 to about 90% of the former and about 85 to about 10% of the latter. Actually, commercially available products, for example, Hytrel series of Toray·DuPont products, Perprene series of Toyobo products, etc. can be used.

The afore-mentioned acrylic rubber/polyamide-based thermoplastic elastomer and polyester-based thermoplastic elastomer are blended together in a proportion of 15 to 85wt.% of the former to 85 to15wt.% of the latter, preferably 30 to 70wt.% of the former to 70 to 30wt.% of the latter. More specifically, in the blending of the acrylic rubber/polyamide-based elastomer having a distinguished heat resistance with the polyester-based thermoplastic elastomer having distinguished strength, bendability and moldability, an increasing proportion of the polyester-based thermoplastic elastomer can improve the moldability, and a suitable hardness for the boots can be obtained together with improved strength and elongation. However, the strength is considerably decreased, when left to stand at a elevated temperatures such as about 150°C, and the heat resistance will be deteriorated. On the other hand, an increasing proportion of the acrylic rubber/polyamide-based thermoplastic elastomer can suppress the strength decrease resulting from being left to stand at elevated temperatures such as about 150°C, but the moldability will be deteriorated. Thus, the afore-mentioned range of blending proportion is selected mainly from this viewpoint.

In the afore-mentioned range of blending proportion, the melt viscosity relating to the moldability, physical properties of material (tensile strength, tensile elongation, and tear strength), low temperature characteristics, percent changes in physical properties of materials in the heat resistance test, and percent changes in physical properties of materials in the oil resistance test show about 65 to about 95% of average values of those of the respective materials used in the blend, and thus design for desired product performances can be made as desired by adjusting the blending proportion.

The polyamide-based thermoplastic elastomer for use in the present invention comprises polyamide hard segments and polyether soft segments.

Polyamide for making the polyamide hard segments is the so called nylon resins. For example, at least one of nylon 3, nylon 4, nylon 6, nylon 7, nylon 8, nylon 42, nylon 46, nylon 66, nylon 69, nylon 6 10, nylon 11, nylon 12, nylon 6 66 (caprolactam-hexamethylene adipamide copolymer), etc. can be used.

On the other hand, polyether for making the polyether soft segments includes, for example, polyethylene glycol, polypropylene glycol, polytetramethylene glycol, etc.

These polyamide hard segments and the polyether soft segments can be obtained by block copolymerization, and are bonded to one another through ester bonds and amide bonds. The constitutive proportion of polyamide hard segments and polyether soft segments is typically about 15 to about 90wt.% of the former and about 85 to about 10wt.% of the latter. Actually, commercially available products such as glyron series or glyramide series of Ames·Showa Denko products, UBE-PAE series of Ube Kosan products, Pebacks series of Toray products, etc. can be used.

The acrylic rubber/polyamide-based thermoplastic elastomer and the polyamide-based thermoplastic elastomer are used upon blending 20 to 90wt.%, preferably 30 to 70wt.%, of the former, and 80 to 10wt.%, preferably 70 to 30wt.%, of the latter. More specifically, in the blending of the acrylic rubber/polyamide-based thermoplastic elastomer having a distinguished heat resistance with the polyamide-based thermoplastic elastomer having distinguished strength, bendability and moldability, an increasing proportion of the polyamide-based thermoplastic elastomer can improve the moldability, and a suitable hardness for the boots can be obtained. However, the strength is considerably decreased, when left to stand at elevated temperatures such as about 150 °C, and the heat resistance will be deteriorated. On the other hand, an increasing proportion of the acrylic rubber/polyamide-based thermoplastic elastomer can suppress the strength decrease resulting from being left to stand at elevated temperatures such as about 150°C, but the moldability will be deteriorated. Thus, the afore-mentioned range of blending proportion is selected mainly from this viewpoint.

In the afore-mentioned range of blending proportion, the melt viscosity relating to the moldability, physical properties of materials (tensile strength, tensile elongation, and tear strength), low temperature characteristics, percent changes in physical properties of materials in the heat resistance test; and percent changes in physical proparties of materials in the oil resistance test show about 65 to about 200% of average values of those of the respective materials used in the blend, and thus design for desired product performances can be made as desired by adjusting the blending proportion. Percent changes over 100% in physical properties relate mainly to the tensile strength and the tensile elongation, presumably due to the synergistic effect of blending.

As described above, the acrylic rubber/polyamide-based thermoplastic elastomer can be used as a blend of polyester-based thermoplastic elastomer or polyamide-based thermoplastic elastomer, or as a blend of these two.

In the latter case, not more than 90wt.%, typically 20 to 90wt.%, preferably 30 to 80wt.%, of acrylic rubber/polyamide-based thermoplastic elastomer is used upon blending with not more than 40wt.%, typically 40 to 5wt.%, preferably 35 to 10wt.%, of polyester-based thermoplastic elastomer, and not more than 40wt.%, typically 40 to 5wt.%, preferably 35 to 10wt.%, of polyamide-based thermoplastic elastomer. More specifically, in the blend-ing of the acrylic rubber/polyamide-based thermoplastic elastomer having a distinguished heat resistance with both of the polyester-based thermo-plastic elastomer and the polyamide-based thermoplastic elastomer, both having distinguished strength, bendability and moldability, an increasing proportion of the polyester-based thermoplastic elastomer and the poly-amide-based thermoplastic elastomer can improve the moldability, and a suitable hardness for the boots can be obtained. However, the strength is considerably decreased, when left to stand at elevated temperatures such as about 150°C, and the heat resistance will be deteriorated. On the other hand, an increasing proportion of the acrylic rubber/polyamide-based thermoplastic elastomer can suppress the strength decrease resulting from being left to stand at elevated temperatures such as about 150°C, but the moldability will be deteriorated. Thus, the afore-mentioned range of blending proportion is selected mainly from this viewpoint.

In the afore-mentioned range of blending proportion, the melt viscosity relating to the moldability, physical properties of materials (tensile strength, tensile elongation, and tear strength), low temperature characteristics, percent charges in physical properties of materials in the heat resistance test, and percent changes in physical properties of materials in the oil resistance test show about 65 to about 200% of average values of those of the respective materials used in the blend, and thus design for desired product performances can be made as desired by adjusting the blending proportion. Percent changes over 100% in physical properties relate mainly to the tensile strength and the tensile elongation, presumably due to the synergistic effect of blending.

The present composition can contain a compatibilizing agent capable of improving a compatibility of acrylic rubber/polyester-based thermoplastic elastomer with at least one of polyester-based thermoplastic elastomer and polyamide-based thermoplastic elastomer, or can contain various additives such as an antioxidant, a stabilizer, a tackifier, a release agent, a pigment, a fuel agent, etc. To improve the strength and rigidity, a particulate reinforcing component, short fibers, etc. can be further added thereto.

Preparation of the composition can be carried out by well known methods, for example, by mixing through a biaxial extruder, a blender, a Henschel mixer, an uniaxial extruder, rolls, a Banbury mixer, a kneader, etc. Joint boots can be molded by blow molding, injection molding, compression molding, extrusion molding, etc., among which blow molding is preferable because of less anisotropy in the physical properties of materials. The molding can be carried out appropriately by heating at 230° to 280°C for 1 to 10 minutes to plasticize the materials.

### EXAMPLES

The present invention will be described below, referring to

### Examples.

EXAMPLES 1 TO 3, AND COMPARATIVE EXAMPLES 1 TO 4
Acrylic rubber/polyamide-based thermoplastic elastomer and polyester-based thermoplastic elastomer were kneaded in predetermined proportions (as given in the following Table 1) through a biaxial extruder to obtain pelletized materials. The pelletized materials were dried at 100°C for 3 hours, then plasticized at 250°C for 3 minutes through an injection molding machine to prepare test pieces (100mm × 100mm × 2mm). The pelletized materials were also plasticized by heating at 250°C for 3 minutes through a blow molding machine to mold joint boots. The resulting pelletized materials, test pieces, or molding products were subjected to evaluation of performance and materials as to melt viscosity, hardness, low temperature durability, bending-cracking growth test, grease resistance, compression set (sealability), high temperature durability and moldability.
Melt viscosity : 8g of pellelized blend was subjected to determination by a capillograph with a capillary (pore size : 1mm and flow path length : 10mm), available from Toyo Seiki Co., at 230°C and a shear rate 610/sec.
Hardness (Type D) : according to JIS K6253
Those showing a Type D durometer hardness of 55 or more were not preferable as joint boot materials
Low temperature durability : A boot containing a predetermined amount of grease as sealed therein was engaged with a constant velocity joint, followed by setting to a revolution durability tester for constant velocity joint boot and being left to stand at -40°C for 2 hours, and then subjected to testing of 50 repetitions of a cycle consisting of (1) actuating the tester to make 200 revolutions for 10 minutes in the circumstance at -40°C, while fixing the joint angle to 35° , and (2) holding the tester at a standstill for 30 minutes
Those with no abnormality were recorded as (>50), while as to those damaged the number of cycles by the time of damage occurrence was recorded
Those damaged at less than 50 cycles were deemed unsatisfactory for boot performance
Bending-cracking growth test: according to JIS K6260
Test pieces for bending cracking were each provided with a 2mm-long crack, and number of bendings until the crack grew 6mm long was determined
Those whose cracks grew 6mm long at the number of not more than 300,000 bendings were deemed unpreferable as joint boot materials
Grease resistance : Test pieces were dipped into grease at 120°C for 70 hours to determine a percent volumic expansion
Test pieces showing a percent volumic expansion of 10% or more were deemed unpreferable as joint boot materials
Compression set (sealability) : according to JIS K6262
Compression set at 130°C for 70 hours was determined
Test pieces having a compression set of 90% or more were deemed unpreferable as joint boot materials
High temperature durability : A boot containing a predetermined amount of grease as sealed therein was engaged with a constant velocity joint, followed by setting to a revolution durability tester for constant velocity joint boot, while fixing the joint angle to 35°, and starting the tester to operate at a revolution rate of 600 revolutions/minutes in the circumstance at 130°C, thereby conducting continuous operation for 500 hours
Those with no grease leakage from the contact position between the joint and the boot were evaluated as O, those with grease cozing as Δ, and those with grease leakage as ×
Those with grease leakage were deemed unsatisfactory for boot performance
Moldability : In boot molding, products releasable from the mold by air blowing without any problem were evaluated as ○, those failing to be released from the mold in a probability of less than 10% as Δ, and those failing to be released from the mold in a probability of 10% or more, or damaged at the mold release as ×.

The results are shown in the following Table 1 together with blend compositions.

**Table 1**

| | Ex. No. | | | Comp. No | | | |
|---|---|---|---|---|---|---|---|
| | 1 | 2 | 3 | 1 | 2 | 3 | 4 |
| [Blend composition ; wt.%] | | | | | | | |
| Acrylic rubber/polyamide-based TPE (ZEON CHEMICAL product, Zeotherm100-90B) | 50 | 55 | 65 | - | 10 | 100 | 90 |
| Polyester-based TPE (Toray· DuPont product, Hytrel 4767) | 50 | 45 | 35 | 100 | 90 | - | 10 |

| [Performance· material evaluation] | | | | | | | |
|---|---|---|---|---|---|---|---|
| Melt viscosity (Pa· s) | 600 | 710 | 825 | 250 | 310 | 1000 | 910 |
| Hardness (Type D durometer) | 45 | 45 | 46 | 47 | 47 | 50 | 48 |
| Low temperature durability (cycles) | >50 | >50 | >50 | >50 | >50 | 30 | 10 |
| Bending cracking growth (10⁴ repetitions) | 120 | 110 | 140 | 150 | 130 | 10 | 5 |
| Grease resistance ΔV(%) | +7.2 | +6.3 | +4.3 | +14.5 | +13.1 | +2.3 | +6.2 |
| Compression set (Sealability) (%) | 82 | 83 | 83 | 80 | 82 | 85 | 85 |
| High temperature durability | ○ | ○ | ○ | × | × | ○ | ○ |
| Moldability | ○ | ○ | ○ | ○ | ○ | × | × |

It can be concluded from the foregoing results that those given in all the Examples have a good sealing performance due to good low temperature durability, heat resistance, fatigue resistance, grease resistance, moldability, and low compression set as joint boot materials, except for the high temperature durability because some of molding products had laminar exfoliation after the test. On the other hand, in the case of single polyester-based thermoplastic elastomer or a 90:10 blend of polyester-based thermoplastic elastomer : acrylic rubber/polyamide-based thermoplastic elastomer, the percent volumic expansion showed more than 10% and the high temperature durability was found poor and unpreferable (Compara-tive Examples 1 and 2). In the case of single acrylic rubber/polyamide-based thermoplastic elastomer or a 90:10 blend of acrylic rubber/polyamide-based thermoplastic elastomer : polyester-based thermoplastic elastomer, the low temperature durability, fatigue resistance and moldability were found poor and unsatisfactory for boot performance (Comparative Examples 3 and 4).

### EXAMPLES 4 TO 6 AND COMPARATIVE EXAMPLES 5 TO 8

In Examples 1 to 3, predetermined amounts of Zeon Chemical product, Zeotherm 100-80B were used as acrylic rubber/polyamide-based TPE and predetermined amounts of polyamide-based thermoplastic elastomer (Ames-Showa Denko product, Glyron ELX50HNZ) were used in place of the polyester-based thermoplastic elastomer to mold joint boots (drying time of pelletized material: 5 hours) and evaluate performance and materials.

The results are given in the following Table 2 together with blend compositions.

**Table 2**

| | Ex. No. | | | Comp. Ex. No | | | |
|---|---|---|---|---|---|---|---|
| | 4 | 5 | 6 | 5 | 6 | 7 | 8 |
| [Blend composition ; wt.%] | | | | | | | |
| Acrylic rubber/polyamide-based TPE | 60 | 50 | 40 | 100 | 95 | - | 10 |
| Polyamide-based TPE | 40 | 50 | 60 | - | 5 | 100 | 90 |

| [Performance· material evaluation] | | | | | | | |
|---|---|---|---|---|---|---|---|
| Melt viscosity (Pa· s) | 790 | 640 | 510 | 1150 | 920 | 250 | 310 |
| Hardness (Type D durometer) | 38 | 39 | 40 | 25 | 29 | 44 | 42 |
| Low temperature durability (cycles) | >50 | >50 | >50 | 10 | 20 | >50 | >50 |
| Bending cracking growth (10⁴ repetitions) | 110 | 120 | 140 | 30 | 30 | 80 | 70 |
| Grease resistance ΔV(%) | +5.2 | +6.4 | +7.1 | +2.5 | +3.3 | +15.6 | +12.3 |
| Compression set (Sealability) (%) | 85 | 84 | 84 | 88 | 88 | 80 | 81 |
| High temperature durability | ○ | ○ | ○ | ○ | ○ | × | × |
| Moldability | ○ | ○ | ○ | × | × | ○ | ○ |

It can be concluded from the foregoing results that those shown in Examples 4 to 6 had a good sealing performance due to good low temperature durability, heat resistance, fatigue resistance, grease resistance, moldability, and low compression set as joint boot materials. Particularly, as to the fatigue resistance (bending-cracking growth test), better results than the performance of the raw materials could be obtained. As to the high temperature durability, the molding products had no laminar exfoliation after the test. On the other hand, in the case of single acrylic rubber/polyamide-based thermoplastic elastomer or a 95:5 blend of acrylic rubber/polyamide-based thermoplastic elastomer : polyamide-based thermoplastic elastomer, the low temperature durability, fatigue resistance, and moldability were found poor and thus were unsatisfactory for the boot performance (Comparative Examples 5 and 6). In the case of single polyamide-based thermoplastic elastomer or a 10:90 blend of acrylic rubber/polyamide-based thermoplastic elastomer : polyamide-based thermoplastic elastomer, a percent volumic expansion of more than 10% was given in the grease resistance test, and also the high temperature durability was found poor and unpreferable (Comparative Examples 7 and 8).

### EXAMPLES 7 TO 9 AND COMPARATIVE EXAMPLE 9

In Examples 1 to 3, and 4 to 6, predetermined amounts of acrylic rubber/polyamide-based thermoplastic elastomer (Zeotherm 100-80B), polyester-based thermoplastic elastomer (Hytrel 4767), and polyamide-based thermoplastic elastomer (Glyron ELX50HNZ) were used to mold joint boots (drying time of pellelized material: 5 hours) and evaluate performance and materials.

The results are given in the following Table 3 together with the blend compositions.

**Table 3**

| | Ex. No. | | | Comp. Ex. No. |
|---|---|---|---|---|
| | 7 | 8 | 9 | 9 |
| [Blend composition ; wt.%] | | | | |
| Acrylic rubber/polyamide-basePE | 60 | 50 | 40 | 90 |
| Polyester-based TPE | 20 | 30 | 30 | 10 |
| Polyamide-based TPE | 20 | 20 | 30 | - |
| [Performance · material evaluation] | | | | |
| Melt viscosity (Pa · s) | 800 | 650 | 530 | 960 |
| Hardness (Type D durometer) | 39 | 40 | 41 | 26 |
| Low temperature durability (cycles) | >50 | >50 | >50 | 10 |
| Bending cracking growth (10⁴ repetitions) | 120 | 120 | 150 | 10 |
| Grease resistance ΔV (%) | +4.9 | +5.8 | +6.7 | +6.5 |
| Compression set (Sealability) (%) | 82 | 80 | 78 | 87 |
| High temperature durability | O | O | O | O |
| Moldability | O | O | O | × |

It can be concluded from the foregoing results that those shown in Example 7 to 9 had a satisfactory sealing performance due to good low temperature durability, heat resistance, fatigue resistance, grease resistance, moldability, and low compression set as joint boot materials. Particularly, as to the fatigue resistance (bending-cracking growth test), better results than the performance of the respective raw materials were obtained. As to the high temperature durability, the molding products had no laminar exfoliation after the test. On the other hand, in the case of a 90:10 blend of acrylic rubber/polyamide-based thermoplastic elastomer : polyester-based thermoplastic elastomer, the low temperature durability, fatigue resistance, and moldability were found poor, and unsatisfactory for boot performance (Comparative Example 9).

## Claims

1. A thermoplastic elastomer blend, which comprises 15 to 85% by weight of a cross-linked acrylic rubber-dispersed polyamide-based thermo-plastic elastomer, and 85 to 15% by weight of a polyester-based thermoplastic elastomer.

2. A thermoplastic elastomer blend according to Claim 1, wherein the cross-linked acrylic rubber-dispersed polyamide-based thermoplastic elastomer is a dispersion of rubber in resin, obtained by dynamic cross-linking of an acrylic rubber into a polyamide resin in the presence of a cross-linking agent.

3. A thermoplastic elastomer blend according to Claim 2, wherein the acrylic rubber is an α -olefin-alkyl (meth)acrylate-cross-linkable group-containing (meth)acrylate copolymer.

4. A thermoplastic elastomer blend according to Claim 1, for use as joint boot-molding materials.

5. A thermoplastic elastomer blend, which comprises 20 to 90% by weight of a cross-linked acrylic rubber-dispersed polyamide-based thermo-plastic elastomer, and 80 to 10% by weight of polyamide-based thermoplastic elastomer.

6. A thermoplastic elastomer blend according to Claim 5, wherein the cross-linked acrylic rubber-dispersed polyamide-based thermoplastic elastomer is a dispersion of rubber in resin, obtained by dynamic cross-linking of an acrylic rubber into a polyamide resin in the presence of a cross-linking agent.

7. A thermoplastic elastomer blend according to Claim 6, wherein the acrylic rubber is an α -olefin-alkyl (meth)acrylate-cross-linkable group-containing (meth)acrylate copolymer.

8. A thermoplastic elastomer blend according to Claim 5, for use as joint boot-molding materials.

9. A thermoplastic elastomer blend, which comprises not more than 90% by weight of a cross-linked acrylic rubber-dispersed polyamide-based thermoplastic elastomer, not more than 40% by weight of a polyester-based thermoplastic elastomer, and not more than 40% by weight of a polyamide-based thermoplastic elastomer.

10. A thermoplastic elastomer blend according to Claim 9, wherein the cross-linked acrylic rubber-dispersed polyamide-based thermoplastic elastomer is a dispersion of rubber in resin, obtained by dynamic cross-linking of an acrylic rubber into a polyamide resin in the presence of a cross-linking agent.

11. A thermoplastic elastomer blend according to Claim 10, wherein the acrylic rubber is an α -olefin-alkyl (meth)acrylate-cross-linkable group-containing (meth)acrylate copolymer.

12. A thermoplastic elastomer blend according to Claim 9, for use as joint boot-molding materials.

13. A thermoplastic elastomer blend according to Claim 9, wherein the blend comprises 20 to 90% by weight of a cross-linked acrylic rubber-dispersed polyamide-based thermoplastic elastomer, 40 to 5% by weight of a polyester-based thermoplastic elastomer, and 40 to 5% by weight of a polyamide-based plastic elastomer.

14. A thermoplastic elastomer blend according to Claim 13, wherein the cross-linked acrylic rubber-dispersed polyamide-based thermoplastic elastomer is a dispersion of rubber in resin, obtained by dynamic cross-linking of an acrylic rubber into a polyamide resin in the presence of a cross-linking agent.

15. A thermoplastic elastomer blend according to Claim 14, wherein the acrylic rubber is an α -olefin-alkyl (meth)acrylate-cross-linkable group-containing (meth)acrylate copolymer.

16. A thermoplastic elastomer blend according to Claim 13, for use as joint boot-molding materials.

17. A joint boot molded from a thermoplastic elastomer blend according to Claim4.

18. A joint boot according to Claim 17, for use on an inboard side (engine side).

19. A joint boot according to Claim 17, which has a hardness (Type D durometer) of not more than 55.

20. A joint boot molded from a thermoplastic elastomer blend according to Claim 8.

21. A joint boot according to Claim 20, for use on an inboard side (engine side).

22. A joint boot according to Claim 20, which has a hardness (Type D durometer) of not more than 55.

23. A joint boot molded from a thermoplastic elastomer blend according to Claim 12.

24. A joint boot according to Claim 23, for use on an inboard side (engine side).

25. A joint boot according to Claim 23, which has a hardness (Type D durometer) of not more than 55.

26. A joint boot molded from a thermoplastic elastomer blend according to Claim 16.

27. A joint boot according to Claim 26, for use on an inboard side (engine side).

28. A joint boot according to Claim 26, which has a hardness (Type D durometer) of not more than 55.
